# EUROPÄISCHE PATENTSCHRIFT

(11) **EP 2 920 858 B1**
(45) Veröffentlichungstag und Bekanntmachung des Hinweises auf die Patenterteilung: **22.06.2016**
(21) Anmeldenummer: 13802966.5
(22) Anmeldetag: 10.12.2013
(51) Int. Cl.: H02J 1/10, H02M 3/155, H02M 1/32, H02J 3/38, H02H 7/10, H02H 7/20, H02H 11/00, H02J 1/00, H02J 7/35

(54) **VERFAHREN UND VORRICHTUNG ZUM SCHUTZ MEHRERER STRINGS EINES PHOTOVOLTAIKGENERATORS VOR RÜCKSTRÖMEN**
METHOD AND DEVICE FOR PROTECTING SEVERAL STRINGS OF A PHOTOVOLTAIC GENERATOR FROM RETURN CURRENTS
PROCÉDÉ ET DISPOSITIF POUR PROTÉGER PLUSIEURS BRANCHES D'UN GÉNÉRATEUR PHOTOVOLTAÏQUE DES COURANTS DE RETOUR

(30) Priorität: 12.12.2012 DE 102012112184
(43) Veröffentlichungstag der Anmeldung: 23.09.2015
(73) Patentinhaber: SMA Solar Technology AG, 34266 Niestetal (DE)
(72) Erfinder: BREMICKER, Sven, 36211 Alheim (DE); HÄRING, Adrian, 34266 Niestetal (DE); WALTER, Matthias, 35576 Wetzlar (DE); WOLF, Henrik, 34131 Kassel (DE); LASCHINSKI, Joachim, 34131 Kassel (DE)
(86) Internationale Anmeldenummer: PCT/EP2013/076114
(87) Internationale Veröffentlichungsnummer: WO 2014/090815

(56) Entgegenhaltungen:
- EP-A1- 2 104 200
- DE-A1-102009 032 288

## Beschreibung

### TECHNISCHES GEBIET DER ERFINDUNG

Die Erfindung bezieht sich auf ein Verfahren und eine Vorrichtung zum Schutz mehrerer Strings eines Photovoltaikgenerators, die parallel an einem gemeinsamen Gleichspannungszwischenkreis angeschlossen sind, vor Rückströmen.

Unter Rückströmen sind Ströme zu verstehen, die entgegen der Richtung der von dem Photovoltaikgenerator im ordnungsgemäßen Betrieb generierten Ströme fließen.

Bei mehreren, parallel an einen gemeinsamen Gleichspannungszwischenkreis angeschlossenen Strings eines Photovoltaikgenerators kann ein Rückstrom beispielsweise dann auftreten, wenn ein einzelner String verschattet ist und so die von den anderen, unverschatteten Strings gespeiste Zwischenkreisspannung des Gleichspannungszwischenkreises einen Rückstrom durch den verschatteten String hervorruft.

Die Photovoltaikmodule, aus denen die Strings eines Photovoltaikgenerators aufgebaut sind, nehmen zwar durch kleinere Rückströme keinen Schaden. Bei der Parallelschaltung einer Vielzahl von Strings besteht jedoch die Gefahr, dass ein einzelner String, der verschattet ist oder aus anderen Gründen eine deutlich geringere Ausgangsspannung aufweist als die parallel geschalteten Strings, mit Strömen von allen anderen Strings als Rückstrom beaufschlagt wird. Hierdurch wird der String schnell überlastet.

Wenn ein String mit falscher Polarität an einen gemeinsamen Sammelanschluss mehrerer Strings angeschlossen wird, schließt er die anderen an den Sammelanschluss angeschlossenen Strings kurz. Der resultierende Kurzschlussstrom, d. h. die Summe der von den anderen Strings generierten Ströme, fließt zwar nicht in Rückwärtsrichtung durch den mit falscher Polarität angeschlossenen String, aber doch entgegen der Vorwärtsrichtung eines dort korrekt angeschlossenen Strings. In jedem Fall droht durch den hohen Kurzschlussstrom von allen anderen Strings eine Beschädigung des mit falscher Polarität angeschlossenen Strings. Durch die Überlastung des betroffenen Strings können auch weitere Schäden verursacht werden, insbesondere kann es zum Ausbruch eines Feuers aufgrund einer eintretenden Überhitzung von Komponenten des betroffenen Strings kommen.

Die vorliegende Erfindung beschäftigt sich mit dem Schutz von Strings bzw. von Energieerzeugungsanlagen und Konstruktionen wie Gebäuden, mit denen die Energieerzeugungsanlagen verbunden oder an denen diese installiert sind, vor derartigen Überlasturigen. Es ist hierbei wünschenswert, einen Schutzgrad zu erreichen, der diese Vorrichtungen bei Auftreten eines einzelnen, beliebigen Fehlers sicher schützt.

Die vorliegende Erfindung ist insbesondere zur Anwendung bei einer Photovoltaikanlage vorgesehen, bei der der Gleichspannungszwischenkreis ein Eingangszwischenkreis eines Wechselrichters ist, der elektrische Energie von dem Photovoltaikgenerator beispielsweise in ein öffentliches Wechselstromnetz einspeist.

### STAND DER TECHNIK

Aus der EP 2 284 973 A1 ist eine Photovoltaikanlage mit einer Mehrzahl von Strings bekannt, die jeweils mehrere, ausschließlich in Reihe geschaltete Photovoltaikmodule aufweisen. Die Strings sind parallel zueinander an Busleitungen angeschlossen. Ein Wandler speist elektrische Energie von den Busleitungen in ein Stromnetz ein. Mit einer Steuerung des Wandlers ist die Spannung einstellbar, die zwischen den Busleitungen abfällt. Für jeden String ist ein Stromsensor vorgesehen, der zumindest erfasst, ob ein Rückstrom zu dem String fließt, und den Rückstrom an die Steuerung meldet. Die Steuerung reduziert die zwischen den Busleitungen anstehende Spannung, um den Rückstrom zu stoppen. Für die einzelnen Strings ist dabei keine einen Rückstrom sperrende Diode vorgesehen. Die Stromsensoren sind vorzugsweise in mehreren dezentral anzuordnenden Anschlusseinheiten vorgesehen. Mit den Anschlusseinheiten werden mehrere Strings im Feld auf ein Paar von Anschlussleitungen parallel geschaltet, bevor diese Anschlussleitungen zu einer den Wandler umfassenden Zentraleinheit geführt werden. An der Zentraleinheit sind Anschlüsse für die zentralen Anschlusseinheiten an die Busleitungen vorgesehen.

Aus der EP 2 282 388 A1 ist eine Vorrichtung zur Einspeisung von elektrischer Energie von einer Vielzahl von Strings von Photovoltaikmodulen in ein Stromnetz bekannt. Die Vorrichtung weist einen Anschluss für jeden String auf, in dem Mittel zur Überstromsicherung und zum selektiven Abschalten des Strings vorgesehen sind. Jeder String besteht dabei üblicherweise nicht nur aus einer Reihenschaltung von Photovoltaikmodulen, sondern weist regelmäßig mehrere Teilstrings auf, die zu einer Parallelschaltung zusammengefasst sind. Die Mittel zur Überstromsicherung und zum selektiven Abschalten der einzelnen Strings weisen jeweils einen Leistungsschalter auf, der motorisch öffenbar und schließbar ist und in Reihe mit einem Stromsensor zwischen dem jeweiligen String und einer Busleitung geschaltet ist. Die Busleitung ist an einen Wechselrichter angeschlossen.

Aus der DE 101 20 595 A1 ist ein Solarenergiesystem mit einer Standard-Solarzellenkette und einer Substandard-Solarzellenkette bekannt. Die von der Substandard-Solarzellenkette ausgegebene Gleichspannung wird durch eine Boostereinheit auf den Pegel der von der Standard-Solarzellenkette ausgegebenen Gleichspannung angehoben. Die Gleichspannung von der Standard-Solarzellenkette und die angehobene Gleichspannung werden an einen Wechselrichter geliefert, durch den eine Wechselspannung erzeugt wird, die an ein Spannungsversorgungswerk geliefert wird. Zwischen der Standard-Solarzellenkette und der Boostereinheit einerseits sowie dem Wechselrichter andererseits ist jeweils eine einen Rückstrom verhindernde Diode vorgesehen. Die Boostereinheit kann als Spannungsanhebeschaltung, d. h. als Hochsetzsteller, ausgebildet sein.

Aus der DE 10 2009 032 288 A1 ist eine Photovoltaikanlage mit den Merkmalen des Oberbegriffs des unabhängigen Patentanspruchs 8 bekannt. Die Photovoltaikanlage weist Photovoltaikmodule auf, die zu mehreren Modulsträngen verschaltet sind und die nach -dem Oberbegriff des unabhängigen Patentanspruchs 1 vor Rückströmen geschützt werden. Die Modulstränge sind mit zugeordneten Gleichspannungswandlern verbunden, und die Ausgänge der Gleichspannungswandler liegen am Eingang eines gemeinsamen Wechselrichters an. Die Gleichspannungswandler sind in mindestens einem Generatoranschlusskasten angeordnet, der vom Wechselrichter räumlich getrennt angeordnet ist. Mit jedem Gleichspannungswandler können ein oder zwei Modulstränge verbunden sein. Bei zwei Modulsträngen je Gleichspannungswandler können Strangsicherungen entfallen. Bei nur einem Modulstrang je Gleichspannungswandler können auch Strangdioden eingespart werden, da dann die galvanisch trennenden Gleichspannungswandler einen Rückstrom verhindern. Indem die galvanisch trennenden Gleichspannungswandler nicht mehr angesteuert werden, kann der Strom durch die Gleichspannungswandler unterbunden werden. Eine zusätzliche Gleichspannungstrennstelle kann somit entfallen. Zudem können die einzelnen Modulstränge stromlos geschaltet werden, ohne die gesamte Photovoltaikanlage abzuschalten.

Aus der US 2007/0107767 A1 ist ein Gleichspannungsenergieerzeugungssystem bekannt, das mehrere parallel an Busleitungen angeschlossene Strings von Energieerzeugungszellen aufweist. Der Strom durch jeden String wird mit einem Stromsensor gemessen. Weiterhin ist für jeden String ein Schaltmodul vorgesehen, um den jeweiligen String mit den Busleitungen zu verbinden, freizuschalten oder über eine dynamische Last kurzzuschließen.

Weiterhin offenbart die EP 2 104 200 A1 einen Wechselrichter, an den über eine Mehrzahl von DC/DC-Wandlern jeweils angeschlossene Strings Energie in einen gemeinsamen Zwischenkreis einspeisen. Durch individuelle Ansteuerung der Wandler kann der Energieertrag optimiert werden, auch wenn einzelne Module eine reduzierte Leistung bereitstellen.

### AUFGABE DER ERFINDUNG

Der Erfindung liegt die Aufgabe zugrunde, ein Verfahren und eine Vorrichtung zum Schutz mehrerer Strings eines Photovoltaikgenerators, die parallel an einen gemeinsamen Gleichspannungszwischenkreis angeschlossen sind, vor Rückströmen bereitzustellen, deren Realisation mit einem nur minimalen Hardwareaufwand verbunden ist.

### LÖSUNG

Die Aufgabe der Erfindung wird durch ein Verfahren mit den Merkmalen des unabhängigen Patentanspruchs 1 und durch eine Vorrichtung mit den Merkmalen des unabhängigen Patentanspruchs 8 gelöst. Bevorzugte Ausführungsformen des erfindungsgemäßen Verfahrens und der erfindungsgemäßen Vorrichtung sind in den abhängigen Patentansprüchen beschrieben.

### BESCHREIBUNG DER ERFINDUNG

Die Erfindung betrifft ein Verfahren zum Schutz mehrerer Strings eines Photovoltaikgenerators, die in Kleingruppen über jeweils einen Hochsetzsteller als DC/DC-Wandler parallel an einen gemeinsamen Gleichspannungszwischenkreis angeschlossen sind, vor Rückströmen, wobei der über jeden der DC/DC-Wandler fließende Strom erfasst wird und wobei ein auftretender Rückstrom durch einen der DC/DC-Wandler durch dauerhaftes Öffnen oder Schließen von Hochsetzstellerschaltern (21) der anderen DC/DC-Wandler beendet wird. Es versteht sich, dass nicht zwingend jeder auch nur kleine auftretende Rückstrom durch einen der DC/DC-Wandler beendet werden muss, sondern dass vielmehr ein Grenzwert für einen zu beendenden Rückstrom durch jeden der DC/DC-Wandler gesetzt werden kann. Dadurch können unnötige Auslösungen des Ansteuerns der DC/DC-Wandler zur Beendigung des Rückstroms vermieden werden.

Weiterhin betrifft die Erfindung eine Vorrichtung zum Schutz mehrerer Strings eines Photovoltaikgenerators, die in Kleingruppen über jeweils einen Hochsetzsteller als DC/DC-Wandler parallel an einen gemeinsamen Gleichspannungszwischenkreis angeschlossen sind, vor Rückströmen, wobei jedem DC/DC-Wandler ein Stromsensor zugeordnet ist, der den über diesen DC/DC-Wandler, fließenden Strom erfasst, und wobei eine zentrale Steuerung einen auftretenden Rückstrom durch einen der DC/DC-Wandler durch dauerhaftes Öffnen oder Schließen von Hochsetzstellerschaltern (21) der anderen DC/DC-Wandler beendet. Die erfindungsgemäße Vorrichtung kann Teil einer Energieerzeugungsanlage sein.

Durch das erfindungsgemäße Verfahren bzw. die erfindungsgemäße Vorrichtung kann ein einfehlersicheres Verhalten einer übergeordneten Energieerzeugungsanlage erreicht, Werden. Dies bedeutet, dass ein beliebiger, einzelner Fehler nicht dazu führen kann, dass die Energieerzeugungsanlage in einem unsicheren, beispielsweise potenziell brandauslösenden, Zustand gelangt bzw. dort verbleibt. Dieses Verhalten kann ohne zusätzliche Bauteile durch eine angepasste Steuerung erreicht werden.

Unter einem String wird hier eine Reihenschaltung mehrerer, in der Regel einer Vielzahl von Photovoltaikmodulen verstanden. Ein String kann dabei grundsätzlich mehrere einander parallel geschaltete Teilstrings aufweisen. Vorzugsweise ist dies jedoch nicht der Fall.

Unter einem Rückstrom durch einen DC/DC-Wandler wird hier ein Strom verstanden, mit dem elektrische Energie von dem Gleichspannungszwischenkreis in die Strings fließt, die über den DC/DC-Wandler an den Gleichspannungszwischenkreis angeschlossen sind. D. h. ein Rückstrom durch einen DC/DC-Wandler weist eine umgekehrte Richtung zu dem Strom auf, der von den Strings in den Gleichspannungszwischenkreis fließen soll. Ein solcher Rückstrom durch einen der DC/DC-Wandler weist auf einen Fehler hin, der mit einem kritischen Strom, insbesondere einem Rückstrom, durch einen der daran angeschlossenen Strings verbunden ist. Dies gilt bereits dann, wenn der Rückstrom durch den der DC/DC-Wandler nur klein ist und damit als Rückstrom durch einen der angeschlossenen Strings unkritisch wäre. Bei der vorliegenden Erfindung werden nur die Ströme durch die DC/DC-Wandler auf auftretende Rückströme überwacht. Dennoch wird ein Schutz vor Überlastungen von allen angeschlossenen Strings erreicht.

Unter einer Kleingruppe ist hier eine so geringe Anzahl von Strings zu verstehen, dass weder bei einer aufgrund von Verschattung oder aus anderen Gründen geringeren Ausgangsspannung eines der Strings noch bei Anschluss eines der Strings mit falscher Polarität der Strom von den anderen Strings der Kleingruppe durch den einen String zu einer Beschädigung des einen Strings führt. Sicher ist dies der Fall, wenn die Kleingruppe aus zwei Strings oder gar nur einem String besteht. Bevorzugt besteht sie aus zwei Strings, um zwar einerseits die Sicherheit zu maximieren, aber andererseits die Anzahl der DC/DC-Wandler gegenüber nur einem String je DC/DC-Wandler zu halbieren.

Erfindungsgemäß wird ein auftretender Rückstrom durch einen der DC/DC-Wandler, der zu einer Überlastung eines darüber angeschlossenen Strings führen kann, durch geeignetes Ansteuern der DC/DC-Wandler beendet. Dies ist grundsätzlich dadurch möglich, dass der DC/DC-Wandler, an dem der Rückstrom auftritt, daraufhin angesteuert wird, den Rückstrom zu unterbrechen.

Es ist daher grundsätzlich bevorzugt, einen auftretenden Rückstrom durch einen der DC/DC-Wandler durch Ansteuern der anderen DC/DC-Wandler zur Unterbrechung des Stromflusses von den über sie angeschlossenen Strings in den gemeinsamen Gleichspannungszwischenkreis zu beenden.

Da es sich bei dem DC/DC-Wandler um Hochsetzsteller handelt, die für ein unabhängiges MPP-Tracking der über sie angeschlossenen Strings nutzbar sind, kann ein auftretender Rückstrom durch einen der DC/DC-Wandler durch Schließen von Hochsetzstellerschaltern der anderen DC/DC-Wandler beendet werden. Durch dieses Schließen der Hochsetzstellerschalter werden die anderen DC/DC-Wandler kurzgeschlossen. Die Hochsetzstellerdioden der anderen DC/DC-Wandler verhindern dabei, dass über die Hochsetzstellerschalter auch der Gleichspannungszwischenkreis kurzgeschlossen wird.

Vor dem Schließen der Hochsetzstellerschalter der anderen DC/DC-Wandler kann versucht werden, den Rückstrom durch den einen DC/DC-Wandler bereits durch Öffnen der Hochsetzstellerschalter der anderen DC/DC-Wandler zu beenden. Dadurch wird deren hochsetzstellende Funktion abgeschaltet und die an dem gemeinsamen Gleichspannungszwischenkreis anliegende Spannung, die den Rückstrom treibt, reduziert.

Solange die Hochsetzstellerdioden funktionstüchtig sind, schützen sie bei dieser Ausführungsform der Erfindung zudem die einzelnen DC/DC-Wandler vor dem Auftreten von Rückströmen. Das heißt, ein Rückstrom aus dem Gleichspannungszwischenkreis durch einen der DC/DC-Wandler kann nur dann auftreten, wenn seine Hochsetzstellerdiode defekt ist und nicht mehr sperrt. Allein die Hochsetzstellerdioden verhindern damit, dass Strings, die mit falscher Polarität angeschlossen werden, mit Strömen beaufschlagt werden, die von den Strings anderer Untergruppen generiert wurden.

Wenn nur einer von zwei Strings einer Untergruppe mit falscher Polarität angeschlossen ist, registriert der Stromsensor des zugehörigen DC/DC-Wandlers keinen oder einen ungewöhnlich geringen Strom durch den DC/DC-Wandler. Wenn beide Strings der jeweiligen Untergruppe mit falscher Polarität angeschlossen sind oder die Untergruppe nur einen mit falscher Polarität angeschlossenen String umfasst, registriert der Stromsensor einen begrenzten Rückstrom. Da dieser Fall bereits das Auftreten von zwei Fehlern umfasst, ist er für die. Betrachtung einer Einfehlersicherheit nicht relevant, wird hier aber zur weiteren Erläuterung der Erfindung betrachtet. Hingegen wirkt sich eine defekte Hochsetzstellerdiode in Verbindung mit einem Rückstrom von den anderen, über die anderen DC/DC-Wandler angeschlossenen Strings in einen erhöhten Rückstrom aus, der bei geöffnetem Hochsetzstellerschalter fließt, während er bei geschlossenem Hochsetzstellerschalter kurzgeschlossen ist. Auf diese Weise können diese Fälle durch Analyse des Auftretens des Rückstroms, insbesondere durch dessen Höhe und/oder dessen Abhängigkeit vom Schaltzustand des zugeordneten Hochsetzstellerschalters, unterschieden werden. Entsprechend ist es denkbar, ein dem Ergebnis der Analyse zugeordnetes Fehlersignal zu erzeugen. Das Fehlersignal kann zumindest einen ersten Zustand aufweisen, der einer defekten Hochsetzstellerdiode zugeordnet ist und einen zweiten Zustand, der einem oder mehreren mit falscher Polarität angeschlossenen Strings entspricht.

Bei der voranstehenden Beschreibung ist davon ausgegangen, dass die Stromsensoren der als Hochsetzsteller ausgebildeten DC/DC-Wandler auf der den Strings zugewandten Eingangsseite der DC/DC-Wandler, d. h. vor dem jeweiligen Hochsetzstellerschalter, angeordnet sind.

Wenn ein Rückstrom erfindungsgemäß durch Schließen der Hochsetzstellerschalter der anderen DC/DC-Wandler in Form von Hochsetzstellern beendet wurde, wird vorzugsweise der Hochsetzstellerschalter des einen DC/DC-Wandlers, über den der Rückstrom aufgetreten ist, dauerhaft geöffnet. Dann speisen die über diesen DC/DC-Wandler an den Gleichspannungszwischenkreis angeschlossenen Strings den Gleichspannungszwischenkreis zumindest mit so viel elektrischer Energie, dass ein Notbetrieb eines hieran angeschlossenen Wechselrichters bzw. seiner Steuerung, die sich ebenfalls aus dem Gleichspannungszwischenkreis speist, möglich ist.

Wenn bei einer erfindungsgemäßen Vorrichtung ein oder mehrere Strings mit falscher Polarität über einen als Hochsetzsteller ausgebildeten Wechselrichter an den Gleichspannungszwischenkreis angeschlossen sind, der zugleich eine defekte Hochsetzstellerdiode aufweist, führt das Schließen der Hochsetzstellerschalter der anderen DC/DC-Wandler ebenfalls zur Unterbrechung des Rückstroms, soweit dieser von den an die anderen DC/DC-Wandler angeschlossenen Strings ausgeht. In diesem Fall, der wegen des Auftretens mehrerer unabhängiger Fehler für die Betrachtung einer Einfehlersicherheit ebenfalls nicht relevant ist, erfolgt jedoch nach Öffnen des Hochstellstellerschalters des DC/DC-Wandlers, an dem der Rückstrom aufgetreten ist, keine Aufladung des Gleichspannungszwischenkreises mit Hilfe der hieran angeschlossenen Strings, zumindest nicht mit der gewünschten Polarität. In dieser speziellen Konfiguration ist ein Schließen auch des Hochsetzstellerschalters des Hochsetzstellers mit der defekten Hochsetzstellerdiode vorteilhaft.

Die Stromsensoren der erfindungsgemäßen Vorrichtung, die den einzelnen DC/DC-Wandlern zugeordnet sind, werden zur Durchführung eines getrennten MPP-Trackings mit den einzelnen DC/DC-Wandlern sowieso benötigt. Die Hochsetzsteller sind gleichzeitig die üblichen DC/DC-Wandler, mit denen ein solches getrenntes MPP-Tracking für einzelne Strings bei sogenannten Multistringwechselrichtern durchgeführt wird. Ausschließlich von den Hochsetzstellerschaltern und Hochsetzstellerdioden solcher Hochsetzsteller macht die Erfindung Gebrauch. Zusätzliche Schalter oder Dioden werden nicht benötigt. Anders gesagt kann die Erfindung bei einem Multistringwechselrichter, der mehrere parallel geschaltete Hochsetzsteller für das separate MPP-Tracking aufweist, im Wesentlichen durch Softwaremodifikationen realisiert werden, wenn die Stromsensoren der einzelnen DC/DC-Wandler auch zur Erfassung von Rückströmen geeignet sind.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der relativen Anordnung und Wirkverbindung mehrerer Bauteile zueinander - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Prinzipschaltbild einer erfindungsgemäßen Vorrichtung, die zwischen einzelne Strings eines Photovoltaikgenerators und einen Eingangszwischenkreis eines Wechselrichters geschaltet ist.
- **Fig. 2**: ist ein Prinzipschaltbild einer konkreteren Ausführungsform der erfindungsgemäßen Vorrichtung, ebenfalls geschaltet zwischen Strings eines Photovoltaikgenerators und den Eingangszwischenkreis eines Wechselrichters, wobei zwei verschiedene potentielle Fehler illustriert sind.
- **Fig. 3**: zeigt ein Flussdiagramm einer Ausführungsform des erfindungsgemäßen Verfahrens.

### FIGURENBESCHREIBUNG

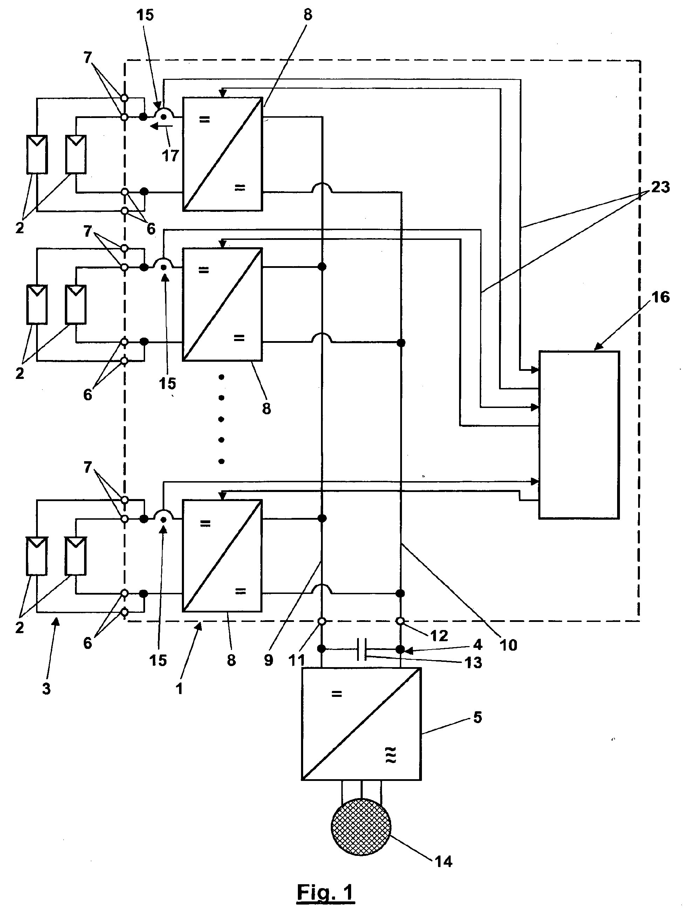

**Fig. 1** zeigt eine Vorrichtung 1, die zwischen die einzelnen Strings 2 eines Photovoltaikgenerators 3 und einen Gleichspannungszwischenkreis 4 eines Wechselrichters 5 geschaltet ist. Die Strings 2 bestehen jeweils aus einer Reihenschaltung einer Vielzahl von Photovoltaikmodulen oder Photovoltaikzellen, was hier zeichnerisch nicht im Detail wiedergegeben ist. Für jeden String 2 weist die Vorrichtung 1 ein Paar von Anschlüssen 6, 7 auf. Dabei sind jeweils zwei Anschlüsse 6 und die zugehörigen beiden Anschlüsse 7 in der Vorrichtung 1 zusammengelegt, so dass die hieran angeschlossenen Strings 2 direkt am Eingang der Vorrichtung 1 parallel geschaltet sind. Diese parallel geschalteten Strings 2 sind dann jeweils über einen DC/DC-Wandler 8 an Busleitungen 9 und 10 angeschlossen. Die Busleitungen 9 und 10 führen über Anschlüsse 11 und 12 der Vorrichtung 1 zu dem Gleichspannungszwischenkreis 4, der hier durch einen Zwischenkreiskondensator 13 symbolisiert ist. Der Wechselrichter 5 speist elektrische Energie aus dem Gleichspannungszwischenkreis 4 in ein Wechselspannungsnetz 14.

Um die in dem Gleichspannungszwischenkreis 4 verfügbare elektrische Energie zu maximieren, sind die DC/DC-Wandler 8 für ein individuelles MPP-Tracking der an sie angeschlossenen Strings 2 ausgebildet. Das heißt, die DC/DC-Wandler 8 passen den Betriebspunkt, d. h. die Betriebsspannung, der an sie angeschlossenen Strings 2 gegenüber der Zwischenkreisspannung des Gleichspannungszwischenkreises 4 so an, dass die von diesen Strings 2 generierte elektrische Leistung maximiert wird. Neben der Ausgangsspannung der Strings 2 ist dabei der durch den jeweiligen DC/DC-Wandler 8 fließende Strom zu messen, um die aktuelle Leistung bestimmen zu können. Die Messung des Stroms erfolgt mit einem Stromsensor 15.

Der Stromsensor 15 wird auch dazu genutzt, das Auftreten von Rückströmen zu erkennen, die der normalen Stromflussrichtung von den Strings 2 in den Gleichspannungszwischenkreis 4 entgegengerichtet sind. Derartige Rückströme können die Integrität der Strings 2 gefährden, insbesondere wenn es sich hierbei um die Ströme von vielen anderen Strings 2 handelt, die durch diese einzelnen Strings fließen. Wenn ein solcher Rückstrom durch einen der DC/DC-Wandler 8 auftritt, steuert eine Steuerung 16, die die mit den Stromsensoren 15 gemessenen Ströme, insbesondere Rückströme 17, als Eingangssignale 23 erhält, die DC/DC-Wandler 8 so an, dass der Rückstrom beendet wird. Was hierzu genau zu unternehmen ist, hängt von der Art der DC/DC-Wandler 8 ab.

Wenn die DC/DC-Wandler 8 in einem nicht zur Erfindung gehörenden Ausführungsbeispiel. Tiefsetzsteller sind, können die Tiefsetzstellerschalter der anderen DC/DC-Wandler, an denen kein Rückstrom aufgetreten ist, geöffnet werden, um die über sie angeschlossenen Strings 2 von dem Gleichspannungszwischenkreis 4 zu trennen. Der Gleichspannungszwischenkreis 4 wird dann nur noch von den Strings 2 aufgeladen, zu denen zuvor der Rückstrom floss. In jedem Fall steuert die Steuerung 16 zur Beendigung des Rückstroms nur die sowieso zum individuellen MPP-Tracking vorgesehenen DC/DC-Wandler 8 an und keine zusätzlichen Trennschalter oder dergleichen an. Es sind auch keine zusätzlichen Dioden vorgesehen, die einen Rückstrom verhindern. Dabei wird hingenommen, dass von dem jeweils einen der paarweise an einen DC/DC-Wandler 8 angeschlossenen Strings 2 ein Rückstrom in den jeweils anderen fließen kann, weil dieser Rückstrom auf den von diesem einen String 2 generierten Strom begrenzt ist. Auch der Anschluss eines Strings 2 mit falscher Polarität, so dass er einen parallel geschalteten String kurzschließt, führt maximal dazu, dass der Kurzschlussstrom eines Strings 2 durch die beiden an einen DC/DC-Wandler 8 angeschlossenen Strings 2 fließt. Einen solchen Stromwert erlauben die Strings 2 dauerhaft, ohne hierdurch beschädigt zu werden oder zu überhitzen. Falls in einer nicht gezeigten Ausführungsform drei Strings 2 an einem DC/DC-Wandler 8 angeschlossen werden, führt die Verpolung eines einzelnen Strings 2' entsprechend maximal zur Bestromung dieses Strings mit dem doppelten Kurzschlussstrom, erzeugt durch die beiden anderen Strings. Auch diese Belastung vertragen viele Strings dauerhaft und schadlos. Häufig ist daher die Konfiguration mit drei Strings wegen der geringeren Zahl von DC/DC-Wandlern bei gegebener Stringzahl vorteilhaft. Bei belastungssensitiven Modulen ist hingegen die Konfiguration mit nur zwei Strings 2 je DC/DC-Wandler 8 vorzuziehen.

In Fig. 1 sind insgesamt drei DC/DC-Wandler 8 mit jeweils zwei angeschlossenen Strings 2 dargestellt. Grundsätzlich könnten aber auch weniger DC/DC-Wandler 8 und entsprechend weniger Strings 2 vorhanden sein. Insbesondere kann die Anzahl der DC/DC-Wandler 8 und der daran angeschlossenen Strings 2 auch noch größer sein. Insbesondere können auch drei Strings 2 an jeden DC/DC-Wandler 8 angeschlossen sein.

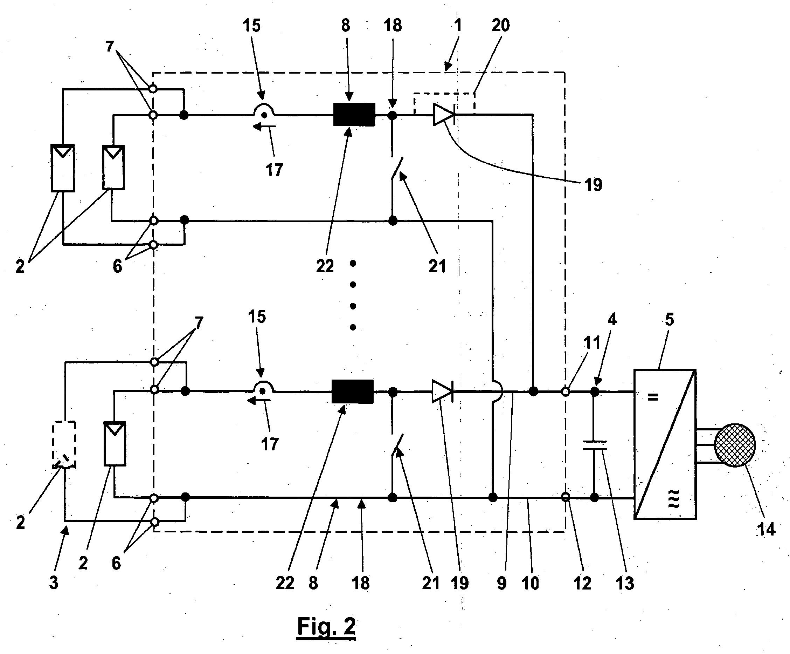

In **Fig. 2** ist eine Vorrichtung 1 mit nur zwei DC/DC-Wandlern 8 dargestellt, die hier konkret als Hochsetzsteller 18 ausgebildet sind. Auch hier kann die Anzahl der DC/DC-Wandler 8 größer sein. An jedem DC/DC-Wandler 8 sind wiederum zwei Anschlüsse 7 und zwei Anschlüsse 6 für jeweils einen String 2 vorgesehen. Auch die Anschlüsse 7 könnten zu jeweils einem Anschluss 7 zusammengefasst sein, wenn die zugehörigen Strings 2 bereits außerhalb der Vorrichtung 1 parallel geschaltet sind. Ansonsten entspricht der grundsätzliche Aufbau der Vorrichtung 1 derjenigen gemäß Fig. 1.

Durch die Ausbildung der DC/DC-Wandler 8 als Hochsetzsteller 18 wirken jedoch deren Hochsetzstellerdioden 19 grundsätzlich als Sperren für Rückströme aus dem Gleichspannungszwischenkreis 4 zu den an den jeweiligen DC/DC-Wandler 8 angeschlossenen Strings 2. Solche Rückströme können daher grundsätzlich nur dann auftreten, wenn eine Hochsetzstellerdiode 19 defekt ist. Dies ist bei dem oberen DC/DC-Wandler 8 in Fig. 2 durch einen mit gestrichelter Linie wiedergegebenen Kurzschlusspfad 20 parallel zu der Hochsetzstellerdiode 19 angedeutet. Durch den Defekt dieser Hochsetzstellerdiode 19 wird auch der Hochsetzsteller 18 insgesamt funktionslos, und bei höherer Spannung in dem Gleichspannungszwischenkreis 4 im Vergleich zur entsprechenden Stringspannung fließt ein Rückstrom in die angeschlossenen Strings 2. Wenn dieser Rückstrom mit dem Stromsensor 15 registriert wird, schließt die hier nicht dargestellte Steuerung die Hochsetzstellerschalter 21 aller anderen DC/DC-Wandler 8, um die daran angeschlossen Strings 2 kurzzuschließen. Hierdurch laden diese den Zwischenkreiskondensator 13 nicht nach, und der Rückstrom wird beendet, sobald die Spannung des Zwischenkreiskondensators 13 durch die rückstrombedingte Entladung ausreichend abgesunken ist. Wenn die Steuerung zugleich den Hochsetzstellerschalter 21 des DC/DC-Wandlers 8, an dem der Rückstrom 15 aufgetreten ist, öffnet, können die hieran angeschlossenen Strings 2 zumindest eine Grundladung des Zwischenkreiskondensators 13 des Gleichspannungszwischenkreises 4 aufrechterhalten. Diese Grundladung reicht zu einer Minimalversorgung von hier nicht näher dargestellten Überwachungs- und Meldeeinrichtungen der Vorrichtung 1 oder des Wechselrichters 5 aus, um den aufgetretenen Rückstromfehler näher zu analysieren, zu beheben und/oder an eine übergeordnete Stelle zu melden.

Ein Rückstrom durch einen der Stromsensoren 15 kann grundsätzlich auch auftreten, wenn beide an den entsprechenden DC/DC-Wandler 8 angeschlossenen Strings 2 mit falscher Polarität angeschlossen sind, was erneut kein bei ausschließlicher Betrachtung der Einfehlersicherheit zu berücksichtigender Fall ist. Dieser Rückstrom fließt über den in der Regel nur vorwärts sperrenden zugehörigen Hochsetzstellerschalter 21. Er kann zwar von der Steuerung nicht durch Öffnen der Hochsetzstellerschalter 21 der anderen DC/DC-Wandler 8 beendet werden, kann aber gerade hierdurch erkannt werden. Als solcher ist ein Rückstrom durch einen DC/DC-Wandler 8 von zwei mit falscher Polarität daran angeschlossen Strings 2 unkritisch, da er nicht über den Strom hinaus geht, der beim Kurzschließen der an einen der anderen DC/DC-Wandler angeschlossenen Strings mit dessen Hochsetzstellerschalter fließt.

In Fig. 2 ist bei dem unteren DC/DC-Wandler 8 angedeutet, dass nicht beide, aber doch ein String 2' mit falscher Polarität angeschlossen ist. Dies führt in der Regel nicht zu einem Rückstrom, der von dem zugehörigen Stromsensor 15 erfasst wird, sondern zu einem im Kreis durch die beiden an den DC/DC-Wandler 8 angeschlossenen Strings 2 und 2'-fließenden Strom. Dieser Strom ist durch die Zahl von nur zwei angeschlossenen Strings 2, 2' auf ein unschädliches Maß begrenzt. Erkannt wird dieser Fehlerfall mit Hilfe des Stromsensors 15 dadurch, dass kein Strom durch den DC/DC-Wandler 8 fließt, obwohl er unter den ansonsten gegebenen Randbedingungen fließen sollte.

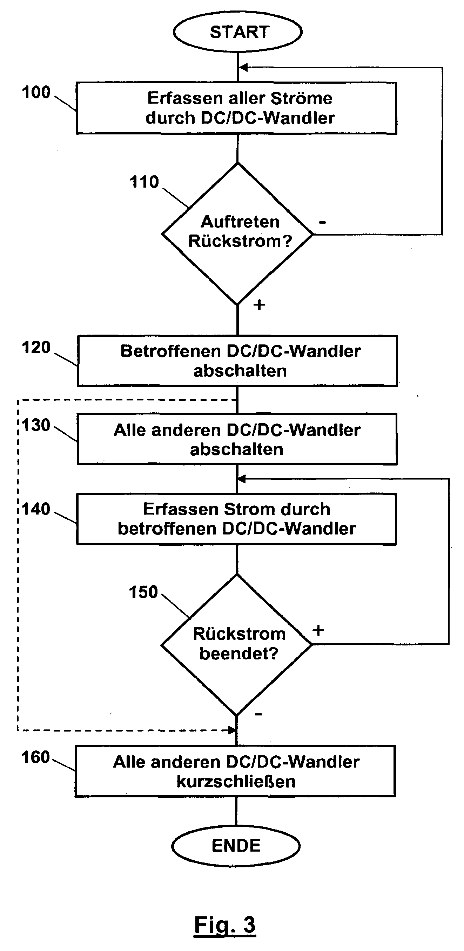

**Fig. 3** zeigt eine mögliche Ausführungsform des erfindungsgemäßen Verfahrens anhand eines Flussdiagramms. In Schritt 100 werden zunächst die fließenden Ströme durch jeden der DC/DC-Wandler, welche erfindungsgemäß Hochsetzsteller sind, erfasst. Diese Ströme werden anschließend im Schritt 110 auf das Auftreten eines Rückstromes hin geprüft. Wird kein Rückstrom festgestellt, verzweigt das Verfahren zurück zu Schritt 100, um zu einem späteren Zeitpunkt erneut alle Ströme zu erfassen. Beim Auftreten eines Rückstromes durch einen der DC/DC-Wandler wird in Schritt 120 zunächst der betroffene DC/DC-Wandler abgeschaltet. Im Falle eines Hochsetzstellers als DC/DC-Wandler wird dazu der Hochsetzstellerschalter geöffnet. In Schritt 130 wird dies auch für die anderen DC/DC-Wandler vorgenommen. Danach wird in Schritt 140 der Strom durch den betroffenen DC/DC-Wandler erneut erfasst, und anschließend wird im Schritt 150 geprüft, ob der Rückstrom durch die getroffenen Maßnahmen bereits beendet ist. Ist dies der Fall, verzweigt das Verfahren zurück zu Schritt 140, um den Strom durch den betroffenen DC/DC-Wandler regelmäßig erneut zu überwachen, weil sich der Rückstrom erneut bilden kann.

Sofern der Rückstrom nicht bereits durch das Abschalten aller DC/DC-Wandler beendet werden kann, werden die nicht betroffenen DC/DC-Wandler in Schritt 160 kurzgeschlossen, d.h. in einer Weise angesteuert, so dass sie keinen weiteren Strom in den gemeinsamen Zwischenkreis einspeisen.

In einer möglichen Alternative verzweigt das Verfahren direkt von Schritt 120 zu Schritt 160. Hierdurch wird bei Auftreten eines Rückstromes unmittelbar ein Zustand erreicht, in dem nur noch der betroffene String in den Zwischenkreis einspeisen kann. Dies beendet zuverlässig die Rückstromsituation. Durch die Schritte 130, 140 und 150 wird demgegenüber ein Zwischenzustand erreicht, in dem alle Strings weiterhin in den Zwischenkreis einspeisen können, wobei alle Strings die gleiche Betriebsspannung aufweisen, da alle DC/DC-Wandler abgeschaltet sind. Dies ist in vielen Fällen ausreichend, um die Rückstromsituation zu beenden.

Abschließend ist noch einmal hervorzuheben, dass in der Vorrichtung 1 im Stromfluss von den Strings 2 zu dem Gleichspannungszwischenkreis 4 keine elektrischen oder elektronischen Bauteile vorgesehen sind, die nicht sowieso für das individuelle MPP-Tracking der jeweils an einen der DC/DC-Wandler 8 angeschlossenen Strings 2 benötigt werden.

### BEZUGSZEICHENLISTE

- 1: Vorrichtung
- 2: String
- 2': String
- 3: Photovoltaikgenerator
- 4: Gleichspannungszwischenkreis
- 5: Wechselrichter
- 6: Anschluss
- 7: Anschluss
- 8: DC/DC-Wandler
- 9: Busleitung
- 10: Busleitung
- 11: Anschluss
- 12: Anschluss
- 13: Zwischenkreiskondensator
- 14: Wechselspannungsnetz
- 15: Stromsensor
- 16: Steuerung
- 17: Rückstrom
- 18: Hochsetzsteller
- 19: Hochsetzstellerdiode
- 20: Kurzschlusspfad
- 21: Hochsetzstellerschalter
- 22: Hochsetzstellerdrossel
- 23: Eingangssignal

## Patentansprüche

1. Verfahren zum Schutz mehrerer Strings (2) eines Photovoltaikgenerators (3), die in Kleingruppen über jeweils einen Hochsetzsteller (18) parallel an einen gemeinsamen Gleichspannungszwischenkreis (4) angeschlossen sind, vor Rückströmen (17), **dadurch gekennzeichnet, dass** der über jeden der Hochsetzsteller (18) fließende Strom erfasst wird und dass ein auftretender Rückstrom (17) durch einen der Hochsetzsteller (18) durch dauerhaftes Öffnen oder Schließen von Hochsetzstellerschaltern (21) der anderen Hochsetzsteller (18) beendet wird.

2. Verfahren nach Anspruch 1, **dadurch gekennzeichnet, dass** die Kleingruppen jeweils zwei oder drei Strings (2) aufweisen.

3. Verfahren nach einem der vorhergehenden Ansprüche, **dadurch gekennzeichnet, dass** der auftretende Rückstrom (17) durch einen der Hochsetzsteller (18) durch Ansteuern der anderen Hochsetzsteller (18) zur Unterbrechung des Stromflusses von den über sie angeschlossenen Strings (2) in den gemeinsamen Gleichspannungszwischenkreis (4) beendet wird.

4. Verfahren nach Anspruch 1, **dadurch gekennzeichnet, dass** die Hochsetzstellerschalter (21) der anderen Hochsetzsteller (18) zunächst geöffnet werden und geprüft wird, ob der Rückstrom (17) dadurch beendet wurde, und dass die Hochsetzstellerschalter (21) der anderen Hochsetzsteller (18) anschließend geschlossen werden, wenn der Rückstrom (17) durch das Öffnen der Hochsetzstellerschalter (21) der anderen Hochsetzsteller (18) nicht beendet wurde.

5. Verfahren nach Anspruch 4, **dadurch gekennzeichnet, dass** dann, wenn der aufgetretene Rückstrom (17) durch Schließen der Hochsetzstellerschalter (21) der anderen Hochsetzsteller (18) beendet wurde, ein Hochsetzstellerschalter (21) des einen Hochsetzstellers (18) über den der Rückstrom aufgetreten ist, geöffnet wird.

6. Verfahren nach einem der vorhergehenden Ansprüche, **dadurch gekennzeichnet, dass** bei Auftreten des Rückstroms (17) ein Fehlersignal erzeugt wird.

7. Vorrichtung zum Schutz mehrerer Strings (2) eines Photovoltaikgenerators (3), die in Kleingruppen über jeweils einen Hochsetzsteller (18) parallel an einen gemeinsamen Gleichspannungszwischenkreis (4) angeschlossen sind, vor Rückströmen (17), **dadurch gekennzeichnet, dass** jedem der Hochsetzsteller (18) ein Stromsensor (15) zugeordnet ist, der den über diesen Hochsetzsteller (18) fließenden Strom erfasst, und dass eine zentrale Steuerung (16) vorhanden und dazu ausgebildet ist, einen auftretenden Rückstrom (17) durch einen der Hochsetzsteller (18) durch dauerhaftes Öffnen oder Schließen von Hochsetzstellerschaltern (21) der anderen Hochsetzsteller (18) zu beenden.

8. Vorrichtung nach Anspruch 7, **dadurch gekennzeichnet, dass** die Kleingruppen jeweils zwei oder drei Strings (2) aufweisen.

9. Vorrichtung nach Anspruch 7 oder 8, **dadurch gekennzeichnet, dass** die Steuerung (16) dazu ausgebildet ist, den auftretenden Rückstrom (17) durch einen der Hochsetzsteller (18) durch Ansteuern der anderen Hochsetzsteller (18) zur Unterbrechung des Stromflusses von den über sie angeschlossenen Strings (2) in den gemeinsamen Gleichspannungszwischenkreis (4) zu beenden.

10. Vorrichtung nach Anspruch 7, **dadurch gekennzeichnet, dass** die Steuerung (16) dazu ausgebildet ist, die Hochsetzstellerschalter (21) der anderen Hochsetzsteller (18) zunächst zu öffnen und zu prüfen, ob der Rückstrom (17) dadurch beendet wurde, und die Hochsetzstellerschalter (21) der anderen Hochsetzsteller (18) anschließend zu schließen, wenn der Rückstrom (17) durch das Öffnen der Hochsetzstellerschalter (21) der anderen Höchsetzsteller (18) nicht beendet wurde.

11. Vorrichtung nach Anspruch 7 oder 10, **dadurch gekennzeichnet, dass** die Steuerung (16) dazu ausgebildet ist, einen Hochsetzstellerschalter (21) des einen Hochsetzstellers (18), über den der Rückstrom (17) aufgetreten ist, zu öffnen, wenn der aufgetretene Rückstrom (17) durch Schließen der Hochsetzstellerschalter (21) der anderen Hochsetzsteller (18) beendet wurde.

12. Vorrichtung nach einem der Ansprüche 7 bis 11, **dadurch gekennzeichnet, dass** die Steuerung (16) dazu ausgebildet ist, bei Auftreten eines Rückstroms (17) ein Fehlersignal zu erzeugen.

## Claims

1. A method for reverse current (17) protection of a number of strings (2) of a photovoltaic generator (3) being connected to a common DC link (4) in parallel in small groups respectively via a corresponding boost converter (18), **characterized in that** the current flowing via each of the boost converters (18) is detected, and a reverse current (17) flowing through one of the boost converters (18) is inhibited by permanent opening or closing of boost converter switches (21) of the other boost converters (18).

2. The method as claimed in claim 1, **characterized in that** the small groups each comprise two or three strings (2).

3. The method as claimed in one of the above claims, **characterized in that** the reverse current (17) flowing through one of the boost converters (18) is inhibited by the control of the other boost converters (18) for interrupting the current flow from the strings (2) respectively connected to the common DC link (4).

4. The method as claimed in claim 1, **characterized in that** the boost converter switches (21) of the other boost converters (18) are initially opened, and it is confirmed whether the reverse current (17) has been inhibited, and **in that** the boost converter switches (21) of the other boost converters (18) are subsequently closed, if the reverse current (17) has not been inhibited by the opening of the boost converter switches (21) of the other boost converters (18).

5. The method as claimed in claim 4, **characterized in that**, once the reverse current (17) has been inhibited by the closing of the boost converter switches (21) of the other boost converters (18), a boost converter switch (21) of the one of the boost converter (18), in which the reverse current has occurred, is opened.

6. The method as claimed in one of the above claims, **characterized in that**, in response to a reverse current (17), an error signal is generated.

7. A device for reverse current (17) protection of a number of strings (2) of a photovoltaic generator (3) being connected to a common DC link (4) in parallel in small groups respectively via a corresponding boost converter (18), **characterized in that** each boost converter (18) is associated with a current sensor (15) detecting the current flowing via said boost converter (18), and **in that** a central control system (16) is provided configured to inhibit the flow of a reverse current (17) through one of the boost converters (18) by permanent opening or closing of boost converter switches (21) of the other boost converters (18).

8. The device as claimed in claim 7, **characterized in that** the small groups each comprise two or three strings (2).

9. The device as claimed in claim 7 or 8, **characterized in that** the control system (16) is configured to inhibit the reverse current (17) flowing through one of the boost converters (18) by the control of the other boost converters (18) for interrupting the current flow from the strings (2) respectively connected to the common DC link (4).

10. The device as claimed in claim 7, **characterized in that** the control system (16) is configured to initially open the boost converter switches (21) of the other boost converters (18), and to confirm whether the reverse current (17) has been inhibited, and configured to subsequently close the boost converter switches (21) of the other boost converters (18), if the reverse current (17) has not been inhibited by the opening of the boost converter switches (21) of the other boost converters (18).

11. The device as claimed in one of claims 7 or 10, **characterized in that** the control system (16) is configured to open a boost converter switch (21) on the one of the boost converter (18) in which the reverse current (17) has occurred, if the reverse current (17) has been inhibited by the closing of the boost converter switches (21) of the other boost converters (18).

12. The device as claimed in one of claims 7 to 11, **characterized in that** the control system (16) is configured to generate an error signal in response to the occurrence of a reverse current (17).

## Revendications

1. Procédé pour protéger contre des courants de retour (17) plusieurs chaînes (2) d'un générateur photovoltaïque (3) raccordées en petits groupes, chacun par au moins un convertisseur élévateur (18), en parallèle à un circuit commun (4) à tension continue intermédiaire,
**caractérisé en ce que**
le courant qui traverse chacun des convertisseurs élévateurs (18) est détectée et
**en ce qu'**un courant de retour (17) qui travers un des convertisseurs élévateurs (18) est interrompu par ouverture ou fermeture permanente des commutateurs (21) des releveurs de tension des autres convertisseurs élévateurs (18).

2. Procédé selon la revendication 1, **caractérisé en ce que** les petits groupes présentent chacun deux ou trois chaînes (2).

3. Procédé selon l'une des revendications précédentes, **caractérisé en ce que** le courant de retour (17) qui survient à travers l'un des convertisseurs élévateurs (18) est interrompu en commander les autres convertisseurs élévateurs (18) à interrompre l'écoulement du courant depuis les chaînes (2) qu'ils raccordent jusque dans le circuit commun (4) à tension continue intermédiaire.

4. Procédé selon la revendication 1, **caractérisé en ce que** les commutateurs (21) des releveurs de tension des autres convertisseurs élévateurs (18) sont d'abord ouverts, **en ce que** l'on vérifie si le courant de retour (17) a été ainsi interrompu et **en ce que** les commutateurs (21) des releveurs de tension des autres convertisseurs élévateurs (18) sont ensuite fermés si le courant de retour (17) n'a pas été interrompu par l'ouverture des commutateurs (21) des releveurs de tension des autres convertisseurs élévateurs (18).

5. Procédé selon la revendication 4, **caractérisé en ce que** lorsque le courant de retour (17) qui est survenu a été interrompu par fermeture des commutateurs (21) des releveurs de tension des autres convertisseurs élévateurs (18), un commutateur (21) de releveur de tension du convertisseur élévateur (18) dans lequel le courant de retour est survenu est ouvert.

6. Procédé selon l'une des revendications précédentes, **caractérisé en ce que** lors de l'apparition du courant de retour (17), un signal de défaut est formé.

7. Dispositiv pour protéger contre des courants de retour (17) plusieurs chaînes (2) d'un générateur photovoltaïque (3) raccordées en petits groupes, chacun par au moins un convertisseur élévateur (18), en parallèle à un circuit intermédiaire commun (4) à tension continue, **caractérisé en ce que**
à chacun des convertisseurs élévateurs (18) est associé un détecteur de courant (15) qui détecte le courant qui traverse ce convertisseur élévateur (18) et
**en ce qu'**une commande centrale (16) est prévue et configurée pour interrompre un courant de retour (17) qui traverse l'un des convertisseurs élévateurs (18) par ouverture et fermeture permanente de commutateurs (21) de releveurs de tension des autres convertisseurs élévateurs (18).

8. Dispositiv selon la revendication 7, **caractérisé en ce que** les petits groupes présentent chacun deux ou trois chaînes (2).

9. Dispositiv selon les revendications 7 ou 8, **caractérisé en ce que** la commande (16) est configurée pour interrompre le courant de retour (17) qui survient à travers l'un des convertisseurs élévateurs (18) en commander les autres convertisseurs élévateurs (18) à interrompre l'écoulement du courant depuis les chaînes (2) qu'ils raccordent jusque dans le circuit commun (4) à tension continue intermédiaire.

10. Dispositiv selon la revendication 7, **caractérisé en ce que** la commande (16) est configurée pour d'abord ouvrir les commutateurs (21) de releveurs de tension des autres convertisseurs élévateurs (18), et pour vérifier si le courant de retour (17) a été ainsi interrompu et pour ensuite fermer les commutateurs (21) de releveurs de tension des autres convertisseurs élévateurs (18) si le courant de retour (17) n'a pas été interrompu par l'ouverture des commutateurs (21) de releveurs de tension des autres convertisseurs élévateurs (18).

11. Dispositiv selon les revendications 7 ou 10, **caractérisé en ce que** la commande (16) est configurée pour ouvrir un commutateur (21) de releveur de tension du convertisseur élévateur (18) dans lequel le courant de retour (17) est survenu lorsque le courant de retour (17) qui est survenu a été interrompu par fermeture des commutateurs (21) de releveurs de tension des autres convertisseurs élévateurs (18).

12. Dispositiv selon l'une des revendications 7 à 11, **caractérisé en ce que** la commande (16) est configurée pour former un signal de défaut lors de l'apparition d'un courant de retour (17).
